# DEMANDE DE BREVET EUROPEEN

(11) **EP 4 847 391 A1**
(43) Date de publication de la demande: **02.12.2026**
(21) Numéro de dépôt: 26180715.0
(22) Date de dépôt: 22.05.2026
(51) Int. Cl.: B64D 37/30, B64D 37/34, F02C 3/22, F02C 7/224, F17C 9/02

(54) **SYSTÈME D'ALIMENTATION EN DIHYDROGÈNE POUR AÉRONEF**

(30) Priorité: 27.05.2025 FR 2505703
(71) Demandeur: Airbus Operations S.A.S., 31060 Toulouse (FR)
(72) Inventeur: RAVENEAU, Guillaume, 31060 TOULOUSE (FR)
(74) Mandataire: Cabinet Le Guen Maillet

(57) **Abrégé**

L'invention concerne un système d'alimentation (100) en dihydrogène d'un système consommateur (50) d'un aéronef à partir d'un réservoir (102). Le système d'alimentation (100) comporte une canalisation d'apport (104) connectée entre le réservoir (102) et le système consommateur (50), une pompe (109) montée sur la canalisation d'apport (104), un système de chauffage (150) comportant un premier échangeur thermique (152) monté sur la canalisation d'apport (104) entre la pompe (109) et la deuxième extrémité (104b) et une boucle thermique (160) présentant un réservoir additionnel (162) contenant un fluide caloporteur, un élément chauffant (164) pour chauffer le fluide caloporteur et un système de transfert (170) pour transférer les calories du fluide caloporteur chauffé au niveau du premier échangeur thermique (152).

Avec un tel arrangement, le fluide caloporteur est chauffé antérieurement au démarrage de l'aéronef dans son réservoir et lorsque le dihydrogène doit être réchauffé, ce fluide caloporteur peut chauffer le dihydrogène.

## Description

### DOMAINE TECHNIQUE

La présente invention concerne un système d'alimentation en dihydrogène pour un aéronef, où le système d'alimentation comporte des moyens de chauffage du dihydrogène, un aéronef comportant un tel système d'alimentation, ainsi qu'un procédé de préchauffage mis en œuvre dans un tel aéronef.

### ÉTAT DE LA TECHNIQUE ANTÉRIEURE

Dans un aéronef, il est connu de mettre en place des réservoirs de dihydrogène où le dihydrogène est utilisé dans un système consommateur comme carburant dans un moteur tel qu'un turboréacteur ou un turbopropulseur ou dans une pile à combustible. Le dihydrogène est ainsi stocké dans un réservoir où il est généralement sous forme liquide alors que son utilisation dans le système consommateur se fait généralement sous forme gazeuse.

Il est donc nécessaire de prévoir un système de chauffage qui chauffe le dihydrogène avant son utilisation. Si les systèmes de chauffage connus sont performants, ils ne sont pas toujours adaptés aux phases de démarrage où la demande en énergie est importante.

Une solution envisagée par les inventeurs consisterait à utiliser des éléments électriques chauffants qui chauffent le dihydrogène qui circule dans une canalisation entre le réservoir et le système consommateur. Cependant, il pourrait arriver que la demande en courant électrique soit alors trop importante pour le réseau interne de l'aéronef et il faudrait alors par exemple faire appel à des installations extérieures.

Il est donc souhaitable de trouver un arrangement qui réchauffe le dihydrogène de manière moins gourmande en énergie.

Les documents US 2023/166847 A1 et WO 2025/027269 A1 divulguent chacun un système d'alimentation destiné à alimenter en dihydrogène un système consommateur d'un aéronef à partir d'un réservoir dudit aéronef.

### EXPOSÉ DE L'INVENTION

Un objet de la présente invention est de proposer un système d'alimentation qui ne présente pas les problèmes de l'état de la technique et qui en particulier utilise un réseau parallèle dans lequel circule un fluide caloporteur chaud.

À cet effet, est proposé un système d'alimentation destiné à alimenter en dihydrogène un système consommateur d'un aéronef à partir d'un réservoir dudit aéronef, ledit système d'alimentation comportant :
- une canalisation d'apport présentant une première extrémité destinée à être fluidiquement connectée à une sortie du réservoir et une deuxième extrémité destinée à être fluidiquement connectée à une entrée du système consommateur,
- une pompe montée sur la canalisation d'apport et arrangée pour entraîner le dihydrogène de la première extrémité à la deuxième extrémité,
- un système de chauffage comportant un premier échangeur thermique monté sur la canalisation d'apport entre la pompe et la deuxième extrémité et une boucle thermique présentant un réservoir additionnel contenant un fluide caloporteur, un élément chauffant arrangé pour chauffer le fluide caloporteur et un système de transfert arrangé pour transférer les calories du fluide caloporteur chauffé au niveau du premier échangeur thermique.

L'élément chauffant est électrique et le système d'alimentation comporte une unité de contrôle arrangée pour commander l'élément chauffant alternativement en allumage et en extinction. Avec un tel système, le fluide caloporteur est chauffé antérieurement au démarrage de l'aéronef dans son réservoir et lorsque le dihydrogène doit être réchauffé, ce fluide caloporteur peut chauffer le dihydrogène.

Selon un mode de réalisation particulier, le système de transfert comporte une canalisation amont fluidiquement connectée entre une sortie du réservoir additionnel et une entrée du premier échangeur thermique, une canalisation aval fluidiquement connectée entre une sortie du premier échangeur thermique et une entrée du réservoir additionnel et une pompe additionnelle arrangée de manière à entraîner le fluide caloporteur dans les canalisations amont et aval et le premier changeur thermique.

Avantageusement, le système d'alimentation comporte un brûleur alimenté en dihydrogène et en air et un deuxième échangeur thermique monté sur la canalisation d'apport entre la pompe et le deuxième échangeur thermique est chauffé par les gaz de combustion du brûleur. Avantageusement, le dihydrogène alimentant le brûleur provient de la canalisation d'apport. Avantageusement, le système d'alimentation comporte un premier capteur de température arrangé pour mesurer une température du fluide caloporteur dans le réservoir additionnel et l'unité de contrôle est arrangée pour commander l'élément chauffant alternativement en allumage et en extinction en fonction des données de température transmises par le premier capteur de température.

Avantageusement, le système d'alimentation comporte un deuxième capteur de température arrangé pour mesurer une température du dihydrogène dans la canalisation d'apport en sortie du premier échangeur thermique et l'unité de contrôle est arrangée pour contrôler la vitesse de la pompe additionnelle en fonction des données de température transmises par le deuxième capteur de température.

Selon un mode de réalisation particulier, le système de transfert comporte :
- un troisième échangeur thermique destiné à prélever des calories au niveau d'une zone chaude du système consommateur,
- un échangeur thermique additionnel,
- une première canalisation fluidiquement connectée entre une sortie du premier échangeur thermique et une entrée du troisième échangeur thermique,
- une deuxième canalisation fluidiquement connectée entre une sortie du troisième échangeur thermique et une entrée de l'échangeur thermique additionnel,
- une troisième canalisation fluidiquement connectée entre une sortie de l'échangeur thermique additionnel et une entrée du premier échangeur thermique,
- une pompe supplémentaire arrangée de manière à entraîner un fluide caloporteur supplémentaire dans les canalisations, le premier échangeur thermique, le troisième échangeur thermique et l'échangeur thermique additionnel,
- une canalisation amont fluidiquement connectée entre une sortie du réservoir additionnel et une entrée de l'échangeur thermique additionnel,
- une canalisation aval fluidiquement connectée entre une sortie de l'échangeur thermique additionnel et une entrée du réservoir additionnel, et
- une pompe additionnelle arrangée de manière à entraîner le fluide caloporteur dans les canalisations amont et aval et l'échangeur thermique additionnel.

Avantageusement, le système d'alimentation comporte un premier capteur de température arrangé pour mesurer une température du fluide caloporteur dans le réservoir additionnel et l'unité de contrôle est arrangée pour commander l'élément chauffant alternativement en allumage et en extinction en fonction des données de température transmises par le premier capteur de température.

Avantageusement, le système d'alimentation comporte un deuxième capteur de température arrangé pour mesurer une température du dihydrogène dans la canalisation d'apport en sortie du premier échangeur thermique et l'unité de contrôle est arrangée pour contrôler la vitesse de la pompe supplémentaire en fonction des données de température transmises par le deuxième capteur de température.

Avantageusement, le système d'alimentation comporte un troisième capteur de température arrangé pour mesurer une température du fluide caloporteur supplémentaire dans la troisième canalisation en entrée du premier échangeur thermique et l'unité de contrôle est arrangée pour contrôler la vitesse de la pompe additionnelle en fonction des données de température transmises par le troisième capteur de température.

L'invention propose également un aéronef comportant un système consommateur, un réservoir contenant du dihydrogène et un système d'alimentation selon l'une des variantes précédentes où la première extrémité est fluidiquement connectée à une sortie du réservoir et où la deuxième extrémité est fluidiquement connectée à une entrée du système consommateur.

Selon un mode de réalisation particulier, le système consommateur est une turbomachine de l'aéronef.

Avantageusement, la zone chaude est une tuyère d'éjection de la turbomachine.

Selon un mode de réalisation particulier, le système consommateur est une pile à combustible de l'aéronef.

Avantageusement, la zone chaude est un circuit de refroidissement de la pile à combustible.

L'invention propose également un procédé de préchauffage mis en œuvre dans un aéronef selon une variante particulière avec un système consommateur particulier où l'unité de contrôle est arrangée pour commander un allumage de l'élément chauffant électrique préalablement à un démarrage de la turbomachine puis pour commander l'allumage de la turbomachine lorsque le fluide caloporteur du réservoir additionnel a atteint une température prédéterminée.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La figure 1 est une vue de côté d'un aéronef selon l'invention,
La figure 2 est une représentation schématique d'un système d'alimentation selon un premier mode de réalisation de l'invention,
La figure 3 est une représentation schématique d'un système d'alimentation selon un deuxième mode de réalisation de l'invention, et
La figure 4 est une représentation schématique d'un exemple d'une architecture matérielle d'une unité de contrôle du système d'alimentation.

### EXPOSÉ DÉTAILLÉ DE MODES DE RÉALISATION

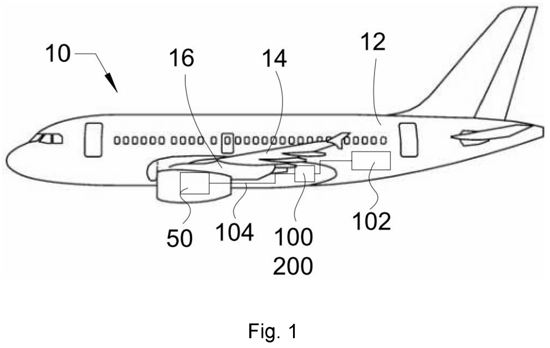

La figure 1 montre un aéronef 10 qui comporte un réservoir 102, un système consommateur 50 qui fonctionne par consommation de dihydrogène et un système d'alimentation 100, 200 selon l'invention qui alimente en dihydrogène le système consommateur 50 depuis le réservoir 102. L'aéronef 10 comporte ici de part et d'autre d'un fuselage 12, une aile 14 à laquelle est fixé un mât réacteur 16 qui porte un moteur 50.

Le réservoir 102 qui contient du dihydrogène généralement sous forme liquide est logé ici dans le fuselage 12 mais il pourrait également être logé dans une aile 14 par exemple. Le réservoir 102 est classiquement une enceinte fermée et étanche au dihydrogène.

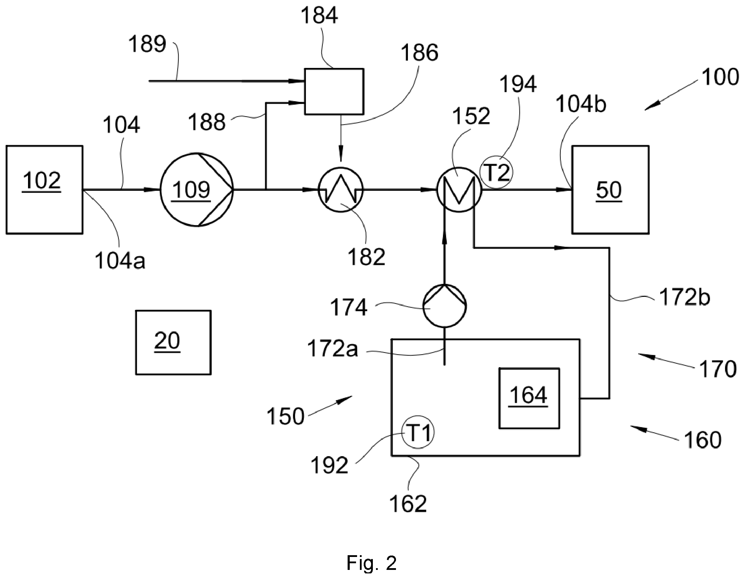

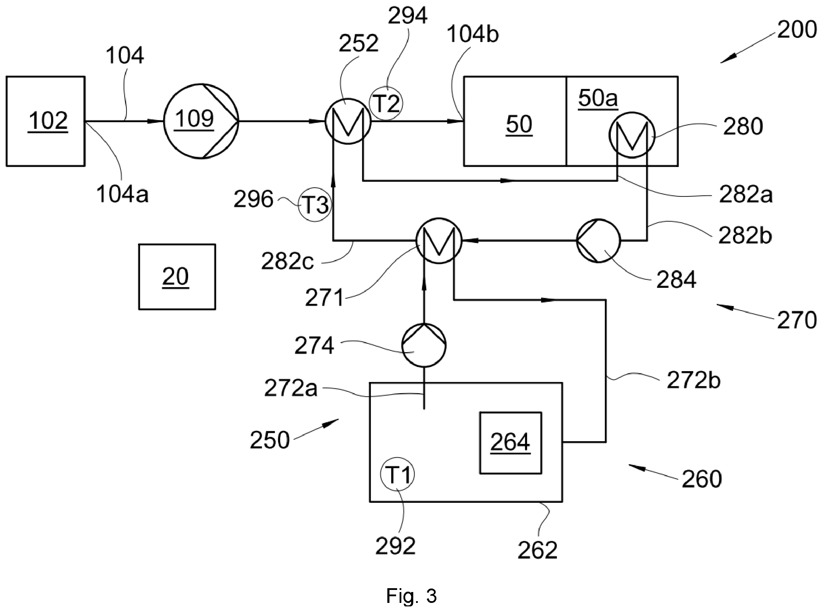

La figure 2 montre le système d'alimentation 100 selon un premier mode de réalisation de l'invention et la figure 3 montre le système d'alimentation 200 selon un deuxième mode de réalisation de l'invention.

Dans le mode de réalisation de l'invention représenté sur la figure 1, le système consommateur 50 est une turbomachine de l'aéronef 10 dont une chambre de combustion est alimentée en dihydrogène pour le faire fonctionner. Dans un autre mode de réalisation de l'invention, le système consommateur 50 peut être une pile à combustible qui est alimentée en dihydrogène et en oxygène pour générer de l'énergie électrique utilisée par l'aéronef 10.

Le système d'alimentation 100, 200 comporte une canalisation d'apport 104 présentant une première extrémité 104a qui est fluidiquement connectée à une sortie du réservoir 102 afin d'y capter le dihydrogène et une deuxième extrémité 104b fluidiquement connectée à une entrée du système consommateur 50.

Pour assurer le déplacement du dihydrogène du réservoir 102 jusqu'au système consommateur 50, le système d'alimentation 100, 200 comporte au moins une pompe 109 qui est montée sur la canalisation d'apport 104 et qui est arrangée pour entraîner le dihydrogène de la première extrémité 104a, c'est-à-dire du réservoir 102 à la deuxième extrémité 104b, c'est-à-dire au système consommateur 50.

La pompe 109 peut être une pompe centrifuge, un compresseur ou tout type de dispositif permettant de mettre en mouvement le dihydrogène.

Pour réchauffer le dihydrogène avant son arrivée au niveau du système consommateur 50, le système d'alimentation 100, 200 comporte également un système de chauffage 150, 250.

Le système de chauffage 150, 250 comporte un premier échangeur thermique 152, 252 monté sur la canalisation d'apport 104 entre la pompe 109 et la deuxième extrémité 104b pour permettre un transfert de calories vers le dihydrogène circulant dans la canalisation d'apport 104 depuis une source chaude qui est ici une boucle thermique 160, 260. La canalisation d'apport 104 est ainsi fluidiquement connectée à une première entrée du premier échangeur thermique 152, 252 et à une première sortie du premier échangeur thermique 152, 252 qui est en continuité fluidique avec la première entrée. D'une manière générale, le premier échangeur thermique 152, 252 permet de chauffer le dihydrogène, en particulier lors du démarrage ou du redémarrage du système consommateur 50, en particulier lorsque celui-ci est une turbomachine. D'une manière générale, dans la présente description, classiquement, un échangeur thermique comporte une première entrée qui est en continuité fluidique avec une première sortie et une deuxième entrée qui est en continuité fluidique avec une deuxième sortie.

La boucle thermique 160, 260 présente un réservoir additionnel 162, 262 contenant un fluide caloporteur, un élément chauffant 164, 264 arrangé pour chauffer le fluide caloporteur et un système de transfert 170, 270 qui est arrangé pour transférer les calories du fluide caloporteur chauffé par l'élément chauffant 164, 264 au niveau du premier échangeur thermique 152, 252 et alors au dihydrogène qui y circule.

L'élément chauffant 164, 264 est un élément électrique qui est alimenté électriquement pour générer de la chaleur comme une résistance électrique par exemple. L'élément chauffant 164, 264 est disposé par exemple dans le réservoir additionnel 162, 262 ou autour de canalisations dans lesquelles circule le fluide caloporteur.

Le système d'alimentation 100, 200 comporte alors une unité de contrôle 20 qui est arrangée pour commander l'élément chauffant 164, 264 alternativement en allumage et en extinction. Ainsi, lors d'une phase de démarrage, l'élément chauffant 164, 264 est allumé pour chauffer le fluide caloporteur qui est mis en mouvement et qui transfère ses calories au dihydrogène au niveau du premier échangeur thermique 152, 252. Avec un tel arrangement, la chaleur est stockée dans le réservoir additionnel 162, 262 et elle peut être utilisée à la demande pour chauffer le dihydrogène.

En particulier, l'unité de contrôle 20 est arrangée pour commander un allumage de l'élément chauffant 164, 264 électrique préalablement à un démarrage de la turbomachine 50 puis pour commander l'allumage de la turbomachine 50 lorsque le fluide caloporteur du réservoir additionnel 162, 262 a atteint une température prédéterminée et enregistrée par exemple dans une mémoire de l'unité de contrôle 20.

Dans le premier mode de réalisation de l'invention, le système de transfert 170 prend la forme d'un simple circuit fermé. Le système de transfert 170 comporte une canalisation amont 172a fluidiquement connectée entre une sortie du réservoir additionnel 162 et une deuxième entrée du premier échangeur thermique 152 et une canalisation aval 172b fluidiquement connectée entre une deuxième sortie du premier échangeur thermique 152 et une entrée du réservoir additionnel 162.

Le système de transfert 170 comporte également une pompe additionnelle 174 qui est montée ici sur la canalisation amont 172a et qui entraîne le fluide caloporteur dans les canalisations amont 172a et aval 172b et le premier échangeur thermique 152.

La pompe additionnelle 174 peut être une pompe centrifuge, un compresseur ou tout type de dispositif permettant de mettre en mouvement le fluide caloporteur.

Ainsi la pompe additionnelle 174 met le fluide caloporteur en circulation dans les canalisations amont 172a et aval 172b pour alimenter le premier échangeur thermique 152 et ainsi chauffer le dihydrogène qui y circule.

Dans le mode de réalisation représenté ici, le système d'alimentation 100 comporte également un autre système de chauffage qui assure un préchauffage avant le premier échangeur thermique 152. Cet autre système de chauffage comporte un brûleur 184 qui est alimenté en dihydrogène et en air depuis deux entrées dudit brûleur 184 et un deuxième échangeur thermique 182 monté sur la canalisation d'apport 104 entre la pompe 109 et le premier échangeur thermique 152. La canalisation d'apport 104 est ainsi fluidiquement connectée à une première entrée du deuxième échangeur thermique 182 et à une première sortie du deuxième échangeur thermique 182. Le deuxième échangeur thermique 182 assure le chauffage du dihydrogène de manière continue au cours d'un vol de l'aéronef 10 et le premier échangeur thermique 152 assure le chauffage du dihydrogène en cas de besoin en particulier lors du démarrage ou redémarrage de la turbomachine.

Ici, le dihydrogène arrive dans le brûleur 184 par l'intermédiaire d'une canalisation de déviation 188 qui est fluidiquement connectée à la canalisation d'apport 104 et qui peut présenter une vanne de régulation pour piloter la quantité de dihydrogène arrivant dans le brûleur 184. L'air arrive par l'intermédiaire d'une canalisation d'alimentation 189, par exemple depuis l'extérieur de l'aéronef 10.

Le deuxième échangeur thermique 182 est chauffé par les gaz de combustion du brûleur 184 représentés par la flèche 186.

Classiquement le brûleur 184 incorpore un moyen d'allumage qui sert à initier la combustion du dihydrogène et du dioxygène de l'air.

Bien sûr, ledit autre système de chauffage peut prendre d'autres formes.

Dans le premier mode de réalisation de l'invention, le système d'alimentation 100 comporte un premier capteur de température 192 qui mesure une température du fluide caloporteur dans le réservoir additionnel 162 et l'unité de contrôle 20 commande l'élément chauffant 164 alternativement en allumage et en extinction en fonction des données de température transmises par le premier capteur de température 192.

Ainsi, lorsque la température mesurée par le premier capteur de température 192 est supérieure à une valeur seuil, l'unité de contrôle 20 désactive l'élément chauffant 164 et lorsque la température mesurée par le premier capteur de température 192 est inférieure à une valeur seuil, l'unité de contrôle 20 active l'élément chauffant 164.

Dans ce premier mode de réalisation, le système d'alimentation 100 comporte un deuxième capteur de température 194 qui mesure une température du dihydrogène dans la canalisation d'apport 104 en sortie du premier échangeur thermique 152 et l'unité de contrôle 20 contrôle la vitesse de la pompe additionnelle 174 en fonction des données de température transmises par le deuxième capteur de température 194.

Ainsi, lorsque la température mesurée par le deuxième capteur de température 194 est supérieure à une valeur seuil, l'unité de contrôle 20 diminue la vitesse de la pompe additionnelle 174 et lorsque la température mesurée par le deuxième capteur de température 194 est inférieure à une valeur seuil, l'unité de contrôle 20 augmente la vitesse de la pompe additionnelle 174.

Dans le deuxième mode de réalisation de l'invention, le système de transfert 270 prend la forme d'un double circuit fermé. Le système de transfert 270 comporte un troisième échangeur thermique 280 qui prélève des calories au niveau d'une zone chaude 50a du système consommateur 50 et un échangeur thermique additionnel 271. La zone chaude 50a est par exemple une tuyère d'éjection dans le cas d'une turbomachine. La zone chaude 50a est par exemple un circuit de refroidissement de la pile à combustible dans le cas d'une pile à combustible. Un flux chaud issu de la zone chaude 50a traverse le troisième échangeur thermique 280 entre une deuxième entrée et une deuxième sortie de ce dernier.

Le système de transfert 270 comporte une première canalisation 282a fluidiquement connectée entre une deuxième sortie du premier échangeur thermique 252 et une première entrée du troisième échangeur thermique 280, une deuxième canalisation 282b fluidiquement connectée entre une première sortie du troisième échangeur thermique 280 et une première entrée de l'échangeur thermique additionnel 271, et une troisième canalisation 282c fluidiquement connectée entre une première sortie de l'échangeur thermique additionnel 271 et une deuxième entrée du premier échangeur thermique 252.

Le système de transfert 270 comporte une pompe supplémentaire 284 qui est montée ici sur la deuxième canalisation 282b et qui entraîne un fluide caloporteur supplémentaire dans les canalisations 282a-c, le premier échangeur thermique 252, le troisième échangeur thermique 280 et l'échangeur thermique additionnel 271.

Le système de transfert 270 comporte également une canalisation amont 272a fluidiquement connectée entre une sortie du réservoir additionnel 262 et une deuxième entrée de l'échangeur thermique additionnel 271 et une canalisation aval 272b fluidiquement connectée entre une deuxième sortie de l'échangeur thermique additionnel 271 et une entrée du réservoir additionnel 262.

Le système de transfert 270 comporte enfin une pompe additionnelle 274 qui est montée ici sur la canalisation amont 272a et qui entraîne le fluide caloporteur dans les canalisations amont 272a et aval 272b et l'échangeur thermique additionnel 271.

La pompe additionnelle 274 et la pompe supplémentaire 284 peuvent être des pompes centrifuges, des compresseurs ou tout type de dispositif permettant de mettre en mouvement le fluide caloporteur.

Ainsi la pompe additionnelle 274 met le fluide caloporteur en circulation dans les canalisations amont 272a et aval 272b pour alimenter l'échangeur thermique additionnel 271 et ainsi chauffer le fluide caloporteur supplémentaire qui y circule. Dans le même temps, la pompe supplémentaire 284 met le fluide caloporteur supplémentaire en circulation dans les canalisations 282a-c pour alimenter le premier échangeur thermique 252 et ainsi chauffer le dihydrogène qui y circule.

Dans le deuxième mode de réalisation de l'invention, le système d'alimentation 200 comporte un premier capteur de température 292 qui mesure une température du fluide caloporteur dans le réservoir additionnel 262 et l'unité de contrôle 20 commande l'élément chauffant 264 alternativement en allumage et en extinction en fonction des données de température transmises par le premier capteur de température 292.

Ainsi, lorsque la température mesurée par le premier capteur de température 292 est supérieure à une valeur seuil, l'unité de contrôle 20 désactive l'élément chauffant 264 et lorsque la température mesurée par le premier capteur de température 292 est inférieure à une valeur seuil, l'unité de contrôle 20 active l'élément chauffant 264.

Dans ce deuxième mode de réalisation, le système d'alimentation 200 comporte un deuxième capteur de température 294 qui mesure une température du dihydrogène dans la canalisation d'apport 104 en sortie du premier échangeur thermique 252 et l'unité de contrôle 20 contrôle la vitesse de la pompe supplémentaire 284 en fonction des données de température transmises par le deuxième capteur de température 294.

Ainsi, lorsque la température mesurée par le deuxième capteur de température 294 est supérieure à une valeur seuil, l'unité de contrôle 20 diminue la vitesse de la pompe supplémentaire 284 et lorsque la température mesurée par le deuxième capteur de température 294 est inférieure à une valeur seuil, l'unité de contrôle 20 augmente la vitesse de la pompe supplémentaire 284.

Dans ce deuxième mode de réalisation, le système d'alimentation 200 comporte un troisième capteur de température 296 qui mesure une température du fluide caloporteur supplémentaire dans la troisième canalisation 282c en entrée du premier échangeur thermique 252 et l'unité de contrôle 20 contrôle la vitesse de la pompe additionnelle 274 en fonction des données de température transmises par le troisième capteur de température 296.

Ainsi, lorsque la température mesurée par le troisième capteur de température 296 est supérieure à une valeur seuil, l'unité de contrôle 20 diminue la vitesse de la pompe additionnelle 274 et lorsque la température mesurée par le troisième capteur de température 296 est inférieure à une valeur seuil, l'unité de contrôle 20 augmente la vitesse de la pompe additionnelle 274.

Dans un mode de réalisation particulier, où le système consommateur 50 est une turbomachine de l'aéronef 10 et où l'élément chauffant 164, 264 est un élément électrique, l'unité de contrôle 20 met en œuvre, lorsque l'aéronef 10 est au sol, un procédé de préchauffage qui consiste à commander un allumage de l'élément chauffant 164, 264 électrique préalablement à un démarrage de la turbomachine 50 puis à commander l'allumage de la turbomachine 50 lorsque le fluide caloporteur du réservoir additionnel 162, 262 a atteint une température prédéterminée ainsi que la mise en circulation du dihydrogène vers la turbomachine 50.

Lorsque la température du fluide caloporteur du réservoir additionnel 162, 262 a atteint la température prédéterminée, l'unité de contrôle 20 peut commander l'arrêt de l'élément chauffant 164, 264 pour réduire la consommation électrique.

Durant le vol, l'élément chauffant 164, 264 maintient la température du fluide caloporteur du réservoir additionnel 162, 262 à la température prédéterminée de manière à pouvoir effectuer un redémarrage si besoin.

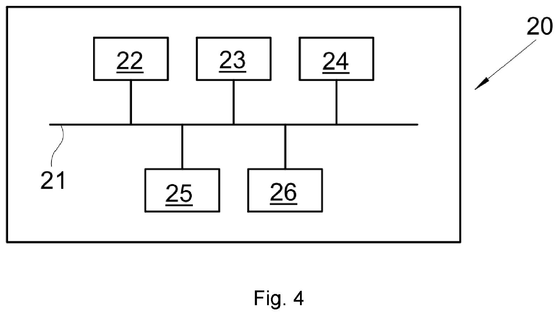

Selon un mode de réalisation particulier représenté à la figure 4, l'unité de contrôle 20 comporte reliés par un bus de communication 21 : un processeur 22 ou CPU (« Central Processing Unit » en anglais) ; une mémoire vive RAM 23 (« Random Access Memory » en anglais) ; une mémoire morte ROM 24 ou Flash (« Read Only Memory » en anglais) ; une unité de stockage 25 telle qu'un disque dur ou un lecteur de support de stockage, tel qu'un lecteur de cartes SD (« Secure Digital » en anglais) ; au moins une interface de communication 26 , permettant par exemple à l'unité de contrôle de communiquer avec les vannes, les pompes, les capteurs, .... Le processeur est capable d'exécuter des instructions chargées dans la RAM à la mise sous tension à partir de la ROM ou de la Flash, d'une mémoire externe (non représentée), d'un support de stockage (tel qu'une carte SD), ou d'un réseau de communication. Lorsque l'équipement est mis sous tension, le processeur est capable de lire de la RAM des instructions et de les exécuter. Ces instructions forment un programme d'ordinateur causant la mise en œuvre, par le processeur, de tout ou partie des algorithmes et étapes décrits ci-dessus.

Tout ou partie des algorithmes et étapes décrits ci-dessus peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

## Revendications

1. Système d'alimentation (100, 200) destiné à alimenter en dihydrogène un système consommateur (50) d'un aéronef (10) à partir d'un réservoir (102) dudit aéronef (10), ledit système d'alimentation (100) comportant :
- une canalisation d'apport (104) présentant une première extrémité (104a) destinée à être fluidiquement connectée à une sortie du réservoir (102) et une deuxième extrémité (104b) destinée à être fluidiquement connectée à une entrée du système consommateur (50),
- une pompe (109) montée sur la canalisation d'apport (104) et arrangée pour entraîner le dihydrogène de la première extrémité (104a) à la deuxième extrémité (104b),
- un système de chauffage (150, 250) comportant un premier échangeur thermique (152, 252) monté sur la canalisation d'apport (104) entre la pompe (109) et la deuxième extrémité (104b) et une boucle thermique (160, 260) présentant un réservoir additionnel (162, 262) contenant un fluide caloporteur, un élément chauffant (164, 264) arrangé pour chauffer le fluide caloporteur et un système de transfert (170, 270) arrangé pour transférer les calories du fluide caloporteur chauffé au niveau du premier échangeur thermique (152, 252),
**caractérisé en ce que** l'élément chauffant (164, 264) est un élément électrique et **en ce que** le système d'alimentation (100) comporte une unité de contrôle (20) arrangée pour commander l'élément chauffant (164, 264) alternativement en allumage et en extinction.

2. Système d'alimentation (100) selon la revendication 1, **caractérisé en ce que** le système de transfert (170) comporte une canalisation amont (172a) fluidiquement connectée entre une sortie du réservoir additionnel (162) et une entrée du premier échangeur thermique (152), une canalisation aval (172b) fluidiquement connectée entre une sortie du premier échangeur thermique (152) et une entrée du réservoir additionnel (162) et une pompe additionnelle (174) arrangée de manière à entraîner le fluide caloporteur dans les canalisations amont (172a) et aval (172b) et le premier échangeur thermique (152).

3. Système d'alimentation (100) selon la revendication 2, **caractérisé en ce qu'**il comporte un brûleur (184) alimenté en dihydrogène et en air, et un deuxième échangeur thermique (182) monté sur la canalisation d'apport (104) entre la pompe (109) et le deuxième échangeur thermique (182) est chauffé par les gaz de combustion du brûleur (184).

4. Système d'alimentation (100) selon la revendication 3, **caractérisé en ce que** le dihydrogène alimentant le brûleur (184) provient de la canalisation d'apport (104).

5. Système d'alimentation (100) selon l'une des revendications 2 à 4, **caractérisé en ce qu'**il comporte un premier capteur de température (192) arrangé pour mesurer une température du fluide caloporteur dans le réservoir additionnel (162) et **en ce que** l'unité de contrôle (20) est arrangée pour commander l'élément chauffant (164) alternativement en allumage et en extinction en fonction des données de température transmises par le premier capteur de température (192).

6. Système d'alimentation (100) selon l'une des revendications précédentes, **caractérisé en ce qu'**il comporte un deuxième capteur de température (194) arrangé pour mesurer une température du dihydrogène dans la canalisation d'apport (104) en sortie du premier échangeur thermique (152) et **en ce que** l'unité de contrôle (20) est arrangée pour contrôler la vitesse de la pompe additionnelle (174) en fonction des données de température transmises par le deuxième capteur de température (194).

7. Système d'alimentation (200) selon la revendication 1, **caractérisé en ce que** le système de transfert (270) comporte :
- un troisième échangeur thermique (280) destiné à prélever des calories au niveau d'une zone chaude (50a) du système consommateur (50),
- un échangeur thermique additionnel (271),
- une première canalisation (282a) fluidiquement connectée entre une sortie du premier échangeur thermique (252) et une entrée du troisième échangeur thermique (280),
- une deuxième canalisation (282b) fluidiquement connectée entre une sortie du troisième échangeur thermique (280) et une entrée de l'échangeur thermique additionnel (271),
- une troisième canalisation (282c) fluidiquement connectée entre une sortie de l'échangeur thermique additionnel (271) et une entrée du premier échangeur thermique (252),
- une pompe supplémentaire (284) arrangée de manière à entraîner un fluide caloporteur supplémentaire dans les canalisations (282a-c), le premier échangeur thermique (252), le troisième échangeur thermique (280) et l'échangeur thermique additionnel (271),
- une canalisation amont (272a) fluidiquement connectée entre une sortie du réservoir additionnel (262) et une entrée de l'échangeur thermique additionnel (271),
- une canalisation aval (272b) fluidiquement connectée entre une sortie de l'échangeur thermique additionnel (271) et une entrée du réservoir additionnel (262), et
- une pompe additionnelle (274) arrangée de manière à entraîner le fluide caloporteur dans les canalisations amont (272a) et aval (272b) et l'échangeur thermique additionnel (271).

8. Système d'alimentation (200) selon la revendication 7, **caractérisé en ce qu'**il comporte un premier capteur de température (292) arrangé pour mesurer une température du fluide caloporteur dans le réservoir additionnel (262) et **en ce que** l'unité de contrôle (20) est arrangée pour commander l'élément chauffant (264) alternativement en allumage et en extinction en fonction des données de température transmises par le premier capteur de température (292).

9. Système d'alimentation (100) selon l'une des revendications 7 ou 8, **caractérisé en ce qu'**il comporte un deuxième capteur de température (294) arrangé pour mesurer une température du dihydrogène dans la canalisation d'apport (104) en sortie du premier échangeur thermique (252) et **en ce que** l'unité de contrôle (20) est arrangée pour contrôler la vitesse de la pompe supplémentaire (284) en fonction des données de température transmises par le deuxième capteur de température (294).

10. Aéronef (10) comportant un système consommateur (50), un réservoir (102) contenant du dihydrogène et un système d'alimentation (100) selon l'une des revendications précédentes où la première extrémité (104a) est fluidiquement connectée à une sortie du réservoir (102) et où la deuxième extrémité (104b) est fluidiquement connectée à une entrée du système consommateur (50).

11. Aéronef (10) selon la revendication 10, **caractérisé en ce que** le système consommateur (50) est une turbomachine de l'aéronef (10).

12. Aéronef (10) selon la revendication 11 lorsqu'elle dépend de la revendication 7, **caractérisé en ce que** la zone chaude (50a) est une tuyère d'éjection de la turbomachine.

13. Aéronef (10) selon la revendication 10, **caractérisé en ce que** le système consommateur (50) est une pile à combustible de l'aéronef (10).

14. Aéronef (10) selon la revendication 13 lorsqu'elle dépend de la revendication 7, **caractérisé en ce que** la zone chaude (50a) est un circuit de refroidissement de la pile à combustible.

15. Procédé de préchauffage mis en œuvre dans un aéronef (10) selon la revendication 11, où l'unité de contrôle (20) est arrangée pour commander un allumage de l'élément chauffant (164, 264) électrique préalablement à un démarrage de la turbomachine (50) puis pour commander l'allumage de la turbomachine (50) lorsque le fluide caloporteur du réservoir additionnel (162, 262) a atteint une température prédéterminée.
